# EUROPÄISCHE PATENTANMELDUNG

(11) **EP 1 512 467 A1**
(43) Veröffentlichungstag der Anmeldung: **09.03.2005**
(21) Anmeldenummer: 04020703.7
(22) Anmeldetag: 01.09.2004
(51) Int. Cl.: B05D 3/06, B29C 71/04

(54) **Verfahren und Vorrichtung zur Härtung einer strahlenhärtbaren Beschichtung sowie Bestrahlungskammer**

(30) Priorität: 04.09.2003 DE 10341208
(71) Anmelder: Cetelon Lackfabrik Walter Stier GmbH & Co. KG, 71254 Ditzingen (DE)
(72) Erfinder: Mehnert, Reiner, Prof. Dr., 04416 Markleeberg (DE); Sobotka, Alex, 04157 Leipzig (DE); Lange, Herbert, 86573 Obergriesbach (DE); Kranich, Hartmut, 86573 Obergriesbach (DE)
(74) Vertreter: Winter, Martina, Dr.

(57) **Zusammenfassung**

Die vorliegende Erfindung betrifft ein Verfahren zur Härtung einer strahlungshärtbaren Beschichtung auf einem Substrat in einer mit mindestens einer oder mehreren UV-Strahlungsquellen versehenen Bestrahlungskammer (50). Erfindungsgemäß ist vorgesehen, dass das Substrat durch einen geschlossenen Kanal geführt wird, der von einer Einlaufkammer (60), der Bestrahlungskammer (50) und einer Auslaufkammer (70) gebildet ist, und dass in die Bestrahlungskammer (50) ein Inertgas derart eingespeist wird, dass ein zumindest leichter Inertgas-Überdruck in der Bestrahlungskammer erzeugt wird. Die vorliegende Erfindung betrifft ferner eine Vorrichtung zur Durchführung dieses Verfahrens.

## Beschreibung

Die vorliegende Erfindung betrifft ein Verfahren zur Härtung einer strahlungshärtbaren Beschichtung nach dem Oberbegriff des Anspruchs 1 sowie eine Vorrichtung zur Durchführung dieses Verfahrens nach dem Oberbegriff des Anspruchs 12 und eine in einer solchen Vorrichtung vorgesehene Bestrahlungskammer.

Derartige Bestrahlungskammern sind Teil einer Vorrichtung zur Härtung strahlungshärtbarer Beschichtungen. Die Bestrahlungskammer ist mit einer oder mehreren UV-Strahlungsquellen versehen. Damit können insbesondere flächige oder dreidimensionale Substrate behandelt werden, indem sie mit einer strahlungshärtbaren Beschichtung versehen werden, die dann mittels UV-Strahlung ausgehärtet wird.

Bekannt ist die Härtung strahlungshärtbarer Beschichtungen durch energiereiche UV-Strahlung, bspw. unter Verwendung von Mitteldruck-Quecksilber-Strahlern oder UV-Excimerstrahlern (R. Mehnert et al., UV εt EB Technology and Application, SITA-Valley, London 1998). Die spezifische elektrische Leistung dieser Strahler liegt typischerweise zwischen 50 und 240 W pro cm Strahlerlänge. Bei einer Strahlerlänge von 1 m beträgt die umgesetzte elektrische Leistung also zwischen 5 und 24 kW. Diese leistungsstarken Strahler werden vor allem für die Härtung von Beschichtungen auf flächigen Substraten eingesetzt. Auf der zu härtenden Schicht werden typische Beleuchtungsstärken von 100 bis 1000 mW/cm² gemessen. Hiermit ist es möglich, Härtungszeiten von 100ms und weniger zu erreichen. Ein derartiges System ist bspw. aus der DE 24 25 217 A1 bekannt. Vergleichbare Vorrichtungen ist bspw. auch aus der WO 96/34700 A1 und der FR 2 230 831 A1 bekannt.

Bei der Anwendung von Mitteldruck-Quecksilber-Strahlern ist zu beachten, dass ca. 50% der elektrischen Leistung in Wärme umgesetzt wird. Eine eng nebeneinander liegende Anordnung derartiger Strahler scheitert nicht nur aus Gründen einer thermischen Überhitzung, sondern auch wegen der notwendigen Hochspannungszuführung an den Enden (Elektroden) der Strahler. Bei UV-Excimerstrahlern wird die Wärme zwar durch Kühlung der Lampenoberfläche abgeführt, der Abstand zwischen benachbarten Röhren und ihre geometrische Anordnung wird jedoch ebenfalls durch die notwendige Hochspannungszuführung beschränkt.

Wegen der biologischen Wirkungen von UV-Strahlen sind umfangreiche Abschirm- und andere Schutzmaßnahmen erforderlich, wenn diese UV-Strahler eingesetzt werden. Zur Härtung von Beschichtungen auf dreidimensionalen Objekten werden z. Bsp. einzelne UV-Strahler so in geschlossenen Räumen angebracht, dass ein ausreichender Strahlungsschutz gewährt werden kann. Eine ausreichend homogene Bestrahlung der zu härtenden Beschichtungen auf dreidimensionalen Substraten ist jedoch praktisch unmöglich. Der Energieaufwand für die Härtung wird deshalb durch den Aufwand für die Härtung von Schichtbereichen bestimmt, die nur durch schräg einfallende Strahlung oder Streustrahlung erreicht werden können.

Ein weiteres Problem ergibt sich insbesondere bei der Polymerisation und Vernetzung von radikalisch härtenden Verbindungen wie z.B. Monomeren und Oligomeren von Acrylaten oder Methacrylaten. Radikalische Polymerisationen werden durch Sauerstoff inhibiert, indem Sauerstoff als Radikalfänger wirkt. Sauerstoff kann sowohl die Initiierung als auch das Kettenwachstum der Polymerisation und die Vernetzung verhindern. Das geschieht vor allem an der Grenzfläche von Luft und Beschichtung im Bereich von wenigen µm Tiefe. Hier kann während des Bestrahlungsvorganges der Verbrauch von Sauerstoff, der in der Schicht durch die Reaktion von Radikalen mit Sauerstoff erfolgt, durch schnelle Nachdiffusion aus der Luft ausgeglichen werden. Die Folge dieses Prozesses ist eine unvollständige Härtung an der Oberfläche, die zu klebrigen, vollkommen unbrauchbaren Beschichtungen führt.

Dieser Inhibierungseffekt kann durch Maßnahmen wie das Abdecken der zu härtenden Oberfläche mit Wachsen oder Folien, der Verwendung sehr höher Dosisleistungen (>2000 mW/cm²) bei der Bestrahlung, der Erhöhung der Photoinitiator-Konzentration, der Verwendung spezieller Amine als Koinitiatoren reduziert bzw. vermieden werden. (R. Mehnert et a.: UVεtEB Curing Technology, SITA-Wiley, London 1998).

Die am häufigsten angewandte Maßnahme zur Vermeidung der Inhibierung ist jedoch die Durchführung der Strahlungshärtung in einer sauerstoffreduzierten Schutzgasatmosphäre. In der Literatur werden Vorrichtungen und Verfahren beschrieben, bei denen Stickstoff (z.B. EP 540 884 A1) bzw. Kohlendioxid (DE 199 57 900 A1) als Schutzgas verwendet werden. Entscheidend für die Vermeidung der Inhibierung der Strahlungshärtung durch Sauerstoff ist die Reduzierung der Restsauerstoffkonzentration in der Bestrahlungskammer. Die Inhibierung der Oberfläche der Beschichtung wird bei der Strahlungshärtung dann sicher vermieden, wenn die Anzahl der durch die Bestrahlung erzeugten Startradikale für Polymerisation und Vernetzung während des gesamten Bestrahlungsvorganges die Anzahl der durch die Reaktion mit Sauerstoff deaktivierten Radikale deutlich übersteigt.

Da die Konzentration der Startradikale in der Beschichtung der Dosisleistung (in mW/cm²) der Strahlenquelle direkt proportional ist, wird die zur sicheren Vermeidung der Inhibierung erforderliche Obergrenze der Sauerstoffkonzentration im Inertgas durch die Dosisleistung der Strahlenquelle bestimmt.

Aus der deutschen Patentanmeldung DE 102 42 719.4 ist nun eine Vorrichtung bekannt, bei der mehrere UV-Strahlungsquellen eng nebeneinander angeordnet und zu ein oder mehreren Bestrahlungsmodulen zusammen geschaltet sind, wobei die Beleuchtungsstärke innerhalb eines Bestrahlungsmoduls und/oder zwischen mindestens zwei Bestrahlungsmodulen räumlich variabel ist. Diese Vorrichtung ist also aus geometrisch geeigneten Anordnungen von mehreren eng nebeneinanderliegenden Strahlungsquellen aufgebaut. Jede dieser Anordnungen wird als Bestrahlungsmodul bezeichnet. Als Bestrahlungsmodul wird hier also eine flächenhafte Anordnung von dicht nebeneinander angeordneten Strahlungsquellen (bspw. mit gemeinsamer elektrischer Versorgung) verstanden. Die einhüllende Fläche der Strahlungsquellen jedes Moduls kann eben oder gekrümmt sein. Es können Bestrahlungsmodule aufgebaut werden, die Licht in eine ausgewählte, auch gekrümmte, Bestrahlungsebene fokussieren und eine geometrisch weitgehend homogene Bestrahlung der Substratoberflächen ermöglichen.

Der Aufbau erfolgt somit derart, dass im Inneren der Bestrahlungskammer, in der die strahlungshärtbaren Beschichtungen gehärtet werden, eine räumlich variable Beleuchtungs-stärke so eingestellt wird, dass die zu härtende Beschichtung homogen gehärtet wird, ohne dass ein störender Wärmeeintrag in Beschichtung und/oder Substrat erfolgt. Die Variation kann einerseits durch Einstellung der einhüllenden Flächen der Strahlungsquellen eines einzelnen Moduls und andererseits durch die räumliche Anordnung der Bestrahlungsmodule zueinander in der Vorrichtung erfolgen, wobei eine Vielzahl geometrischer Anordnungen realisierbar ist. Durch den modularen Aufbau kann die Vorrichtung also an die Geometrie des zu behandelnden Substrates angepasst werden, so dass der Energieaufwand verringert wird. Die Bestrahlungsmodule können daher Leuchtstoffröhren mit einer spezifischen elektrischen Leistung von z.B. 1 W/cm aufweisen. Die Dosisleistung dieser Bestrahlungsanlagen liegt deshalb nur zwischen 10 und 100 mW/cm². Dies hat auch zur Folge, dass der biologische Strahlenschutz vereinfacht wird, d.h. beschränkt werden kann, bspw. auf Maßnahmen, wie sie für die Benutzung von Bräunungslampen gelten.

Um jedoch die in dieser Patentanmeldung genannten Vorteile dieser Bestrahlungsmodule für die Strahlenhärtung von Beschichtungen wie z.B. verringerter Energieaufwand zur Härtung, geringer Wärmeeintrag in das Substrat und die Beschichtung sowie einfacher Strahlenschutz nutzen zu können, müssen Vorrichtungen bereitgestellt werden, die in der entsprechenden Bestrahlungskammer während des Bestrahlungsvorganges eine Restsauerstoffkonzentration von vorzugsweise unter 500 ppm erzeugen.

Diese Konzentration soll auch während des kontinuierlichen Durchlaufs von zu beschichtenden Substraten beibehalten werden, die in kurzem Abstand über längere Zeiten mittels einer Förderanlage zugeführt werden. Bei kontinuierlicher Förderung der Substrate wird jedoch durch Verwirbelung ständig Luft in das Inertgas eingebracht. Die tolerierbare Sauerstoffkonzentration im Inertgas kann dadurch schnell überschritten werden.

Die Aufgabe der vorliegenden Erfindung besteht somit darin, eine Vorrichtung bereit zu stellen, die eine ausreichende Inertisierung von Bestrahlungskammern, die bspw., aber nicht notwendigerweise, mit Leuchtstoffröhren-Modulen ausgerüstet sind, auch dann ermöglicht, wenn beschichtete Substrate kontinuierlich in kurzem Abstand durch die Bestrahlungskammer befördert werden.

Die Lösung besteht in einem Verfahren mit den Merkmalen des Anspruchs 1 bzw. in einer Vorrichtung mit den Merkmalen des Anspruchs 12 bzw. einer Bestrahlungskammer mit den Merkmalen des Anspruchs 8.

Erfindungsgemäß ist also vorgesehen, dass das Substrat durch einen geschlossenen Kanal geführt wird, der von einer Einlaufkammer, der Bestrahlungskammer und einer Auslaufkammer gebildet wird und dass in die Bestrahlungskammer ein Inertgas derart eingespeist wird, dass einen zumindest geringfügigen Inertgas-Überdruck in der Bestrahlungskammer erzeugt wird.

Die erfindungsgemäße Vorrichtung zeichnet sich dadurch aus, dass der Bestrahlungskammer eine Einlaufkammer und eine Auslaufkammer zugeordnet ist, wobei Bestrahlungskammer, Einlaufkammer und Auslaufkammer einen geschlossenen Kanal bilden, und dass die Bestrahlungskammer eine Vorrichtung zur Einspeisung von Inertgas aufweist, welche einen zumindest geringfügigen Inertgas-Überdruck in der Bestrahlungskammer erzeugt.

Gegenstand der vorliegenden Erfindung ist ferner eine Bestrahlungskammer mit einem Rahmen, innerhalb dessen ein Bestrahlungsraum angeordnet ist, dessen Wände für UV-Licht durchlässig sind, in welchem eine Vorrichtung zur Einspeisung von Inertgas vorgesehen ist.

Die Vorrichtung zur Einspeisung von Inertgas dient der Füllung des Volumens der Kammern mit Inertgas durch Luftverdrängung. Die Substrate können dabei in kurzem Abstand kontinuierlich die Bestrahlungskammer durchlaufen. Die für die Strahlenhärtung erforderliche niedrige Konzentration an Restsauerstoff wird durch kontinuierliche Einspeisung von Inertgas in die Bestrahlungskammer erreicht, so dass ein Inertgas-Volumenstrom in Richtung der Einlaufkammer bzw. der Auslaufkammer entsteht. Die Einspeisung des Inertgases muss so erfolgen, dass die geforderte minimale Sauerstoffkonzentration in der Bestrahlungskammer während des Fördervorganges der Substrate aufrecht erhalten wird. Es darf kein unerwünschtes Ansaugen von Luft erfolgen. Dazu wird in der Bestrahlungskammer durch entsprechende Inertgaszuführung ein zumindest geringfügiger Überdruck eingestellt. Dies bewirkt, dass das Inertgas kontinuierlich in Richtung der Einlaufkammer und der Auslaufkammer ausfließt. Das ausfließende Inertgas entfernt somit den durch die Förderung des Substrats eingeschleppten Luftsauerstoff aus dem geschlossenen Kanal.

Vorteilhafte Weiterbildungen ergeben sich aus den Unteransprüchen.

Es ist möglich, die Bestrahlungskammer aus mehreren, luftdicht miteinander verbundenen Elementen zusammen zu setzen, also modular zu gestalten. Damit kann die erfindungsgemäße Vorrichtung für unterschiedliche Kapazitäten ausgelegt werden. Wenn die Kapazität erhöht werden soll, verkürzt sich normalerweise bei gegebener Länge der Bestrahlungskammer mit zunehmender Menge der zu beschichtenden Substrate die Durchlaufzeit der Substrate durch die Bestrahlungskammer. Um nun die notwendige Bestrahlungszeit zur Härtung der Substratoberflächen zu gewährleisten, kann eine längere Bestrahlungskammer mit zusätzlichen UV-Lichtquellen eingesetzt werden. Demgegenüber ist es von Vorteil, eine modular gestaltete Bestrahlungskammer um ein oder mehrere Elemente mit UV-Lichtquellen zu verlängern. Dies ermöglicht eine verbesserte Flexibilität der erfindungsgemäßen Vorrichtung hinsichtlich ihrer Kapazität und erlaubt einen besonders wirtschaftlichen Betrieb.

Gleiches gilt sinngemäß für die Einlaufkammer und die Auslaufkammer.

Eine besonders bevorzugte Weiterbildung sieht vor, dass zusätzlich entweder in die Einlaufkammer oder in die Auslaufkammer oder in beide ebenfalls Inertgas eingespeist wird, derart, dass ein Inertgas-Druck erzeugt wird, der geringer ist als der Inertgas-Druck in der Bestrahlungskammer. Hierdurch wird das Einströmen von Sauerstoffs während des Fördervorganges der Substrate zusätzlich erschwert.

Ferner kann das Inertgas in der Bestrahlungskammer als ein in Förderrichtung verlaufender Volumenstrom eingespeist und aufrechterhalten werden. Die Orientierung in Förderrichtung bewirkt eine zusätzliche Orientierung des Inertgases hin zur Einlauf- bzw. Auslaufkammer, um den Eintritt von Luftsauerstoff in die Bestrahlungskammer zu erschweren.

Die Einspeisung von Inertgas in die Bestrahlungskammer erfolgt hierbei vorzugsweise über eine Anordnung von einem oder mehreren Rohren, die parallel zur Förderrichtung des Substrats angeordnet sind und Ausströmöffnungen aufweisen, die bspw. so gestaltet sein können, dass das Inertgas im Wesentlichen wirbelarm ausströmen kann. Das wird z.B. durch geeignete Reihen von engen und/oder eng nebeneinander angeordneten Düsen und/oder Bohrungen erreicht. Statt Rohren können aber auch bspw. Platten aus einem porösen Material wie bspw. Sinterplatten verwendet werden. Das poröse Material soll für das Inertgas durchlässig sein und vorzugsweise kleine, eng nebeneinander liegende Poren aufweisen, damit das Inertgas im Wesentlichen wirbelfrei ausströmen kann.

Eine andere Weiterbildung sieht vor, dass auch die Einlauf- oder die Ausgangskammer, vorzugsweise jedoch jede Kammer eine eigene Vorrichtung zur Einspeisung von Inertgas aufweist. Die Flussrate der Inertgaszuführung wird in vorteilhafter Weise so eingestellt, dass der Inertgas-Druck in der Bestrahlungskammer am größten ist. Damit wird gesichert, dass das Inertgas kontinuierlich in Richtung der Eingangs- und Ausgangskammer, d.h. in Richtung beider Ausgänge des geschlossenen Kanals fließt.

Die so realisierte Volumeninertisierung kann durch Inertgaseinspeisungen in der Einlauf - und/oder Auslaufkammer ergänzt werden, deren Inertgasfluss dem in Förderrichtung verlaufenden Volumenstrom seitlich überlagert wird. Senkrecht zur Förderrichtung des Substrats können deshalb an den Wänden der Ein- und/oder Auslaufkammer weitere Vorrichtungen zur Inertgaseinspeisung angebracht sein. Die Flussrate des hier senkrecht zur Förderrichtung ausströmenden Inertgases wird vorzugsweise so eingestellt, dass das ein- und/oder auslaufende Substrat schräg zur Förderrichtung mit einem Inertgasstrom beaufschlagt wird, der mitgeführte Luft ablöst und in den auslaufenden Volumenstrom abdrängt. In der Auslaufkammer verhindert diese Art der Einspeisung von Inertgas in vorteilhafter Weise zusätzlich die Rückverwirbelung von Luft in die Bestrahlungskammer.

Im allgemeinen werden Inertgas-Volumenströme von 15 bis 1000 Nm³/h, vorzugsweise zwischen 30 und 400 Nm³/h verwendet. Die Flussrate des senkrecht zur Förderrichtung eingespeisten Inertgas-Volumenstrom beträgt vorzugsweise etwa 10 bis 80 Vol.-% des gesamten Inertgas-Volumenstroms, vorzugsweise 15 bis 60 Vol.-% des Volumenstroms. Die Flussrate für den Volumenstrom kann in einem geschlossenen Kanal mit einem Querschnitt von bspw. 500 x 500 mm typischerweise 200 Nm³/h betragen, während die Flussrate des senkrecht zur Förderrichtung eingespeisten Inertgases vorzugsweise etwa 25 - 50 Vol.-% des Volumenstroms beträgt.

Um den Verbrauch von Inertgas so gering wie möglich zu halten, kann nicht nur der Querschnitt des geschlossenen Kanals an den Querschnitt des zu beschichtenden Substrats angepasst werden, sondern der Ein- und Ausgang des geschlossenen Kanals können z.B. über angebrachte Schablonen, Klappen oder Türen soweit verschlossen werden, dass das Substrat passieren kann und noch ein wirbelarmes Ausströmen des Inertgases möglich ist.

Als Strahlungsquellen kommen Lampen, vorzugsweise Leuchtstoffröhren, niedriger elektrischer Leistung, etwa von 0,1 bis 10 W pro cm Strahlerlänge, in Betracht, die bspw. ein kontinuierliches Emissionsspektrum zwischen 200 und 450 nm, vorzugsweise zwischen 300 und 450 nm aufweisen. Da die Wärmeentwicklung niedriger ist als bei Hochleistungs-UV-Strahlern, genügt es, deren Oberfläche lediglich bspw. mit einem Luftstrom zu kühlen.

Derartige Lampen sind an sich bekannt und werden bspw. als Bräunungslampen in Solarien eingesetzt. Bei einer spezifischen Leistung von bspw. 1 W pro cm Strahlerlänge und der daraus resultierenden geringen Beleuchtungsstärke sind diese Lampen als solche an und für sich nicht für technische Anwendungen zur Härtung strahlungshärtbarer Beschichtungen geeignet. Derartige Lampen, die typischerweise mit Reflektoren mit Abstrahlwinkeln von bspw. ca. 160° versehen sind, in der Regel standardisierte Abmessungen aufweisen (Durchmesser der Röhren ca. 25 bis 45 cm, Leuchtlänge bis ca. 200 cm) und bei einer Betriebsspannung von 220 V betrieben werden, sind sehr gut als Strahlungsquellen für die erwähnten Bestrahlungsmodule geeignet. Dies betrifft insbesondere die Reflektoren, die die Fokussierung in die gewünschte Bestrahlungsebene vereinfachen. Vorteilhaft ist auch ihre hohe Photonenausbeute von ca. 30 % der elektrischen Leistung.

Mit Bestrahlungsmodulen dieser Ausführung erreicht man bspw. in 10 cm Abstand von der Strahlungsquelle Beleuchtungsstärken von typischerweise etwa 20 mW/cm². Diese Beleuchtungsstärken sind zwar um den Faktor 5 bis 50 kleiner als die mit herkömmlichen UV-Strahlern erreichbaren, reichen jedoch aus, um Beschichtungen bei Bestrahlungszeiten von etwa 30 bis 300 s auszuhärten.

Eine weitere vorteilhafte Weiterbildung besteht darin, dass wenigstens ein Bestrahlungsmodul um mindestens eine seiner drei Raumachsen bewegbar in der Vorrichtung angeordnet ist. Dies erleichtert die geometrische Anpassung an das Substrat und die Fokussierung der Strahlen in der gewünschten Bestrahlungsebene.

Um die Haftung strahlungsgehärteter-Beschichtungen auf einigen Substraten, wie bspw. Polypropylen, Polycarbonat und Polyamid, zu verbessern, ist es vorteilhaft, die Beleuchtungsstärke auch zeitlich zu variieren. Beginnt man die Bestrahlung bspw. mit einer kleinen Beleuchtungsstärke, kann die bei der Härtung stets schrumpfende Schicht besser relaxieren als bei sofortiger Bestrahlung mit hoher Beleuchtungsstärke. Spannungen zwischen der zu härtenden Schicht und dem Substrat können sich besser ausgleichen. Die Folge ist eine bessere Haftung der gehärteten Schicht auf dem Substrat. Eine zeitliche Steuerung der Leistung der einzelnen Bestrahlungsmodule ist auf einfache Weise möglich, so dass sich dieses vorteilhafte Bestrahlungsregime nutzen lässt.

Ausführungsbeispiele der vorliegenden Erfindung werden im Folgenden anhand der beigefügten Zeichnungen näher erläutert. Es zeigen:
- Figur 1a:: eine schematische, nicht maßstabsgetreue Darstellung einer Ausführungsform des erfindungsgemäßen Bestrahlungsmoduls in der Ansicht von unten;
- Figur 1b:: das Bestrahlungsmodul aus Figur 1a in einer Seitenansicht gemäß Pfeil B;
- Figur 1c: das Bestrahlungsmodul aus Figur 1a in einer Seitenansicht gemäß Pfeil C;
- Figur 2: einen Schnitt entlang der Linie II - II in Figur 1a;
- Figur 3: eine schematische, nicht maßstabsgetreue Seitenansicht eines Ausführungsbeispiels der erfindungsgemäßen Vorrichtung für die diskontinuierliche Bestrahlung;
- Figur 4: eine schematische, nicht maßstabsgetreue Seitenansicht eines Ausführungsbeispiels der erfindungsgemäßen Vorrichtung für die kontinuierliche Bestrahlung;
- Figur 5: einen Längsschnitt durch ein Ausführungsbeispiel einer erfindungsgemäßen Vorrichtung in schematischer, nicht maßstabsgerechter Darstellung;
- Figur 6: einen Längsschnitt durch eine Bestrahlungskammer einer erfindungsgemäßen Vorrichtung;
- Figur 7: einen Schnitt entlang der Linie VII - VII in Figur 6;
- Figur 8: einen Längsschnitt durch eine Einlauf- bzw. Auslaufkammer in einer Darstellung wie in Figur 7.

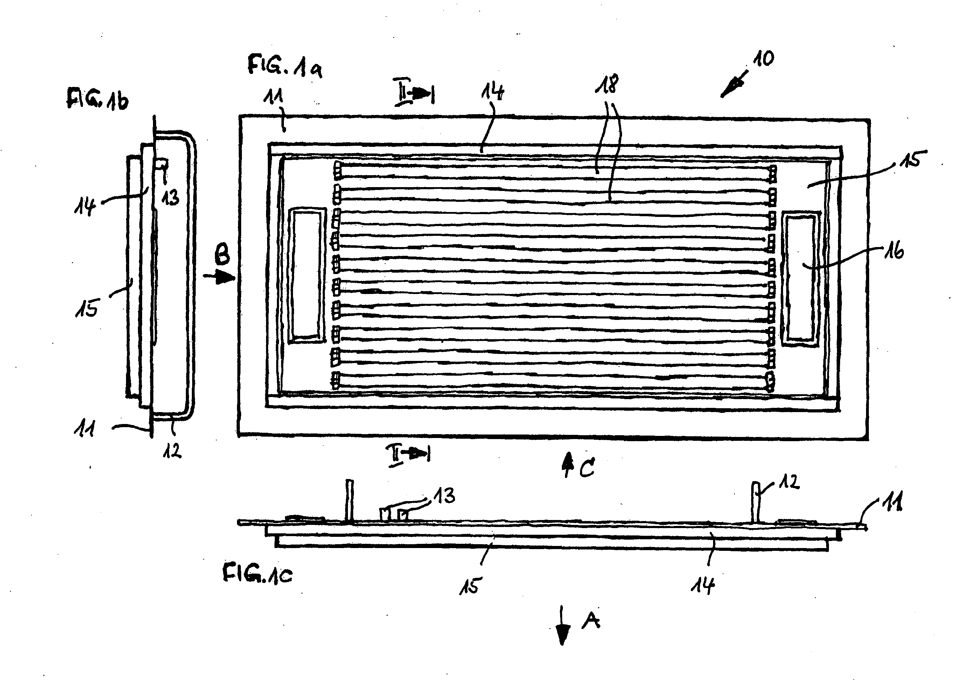

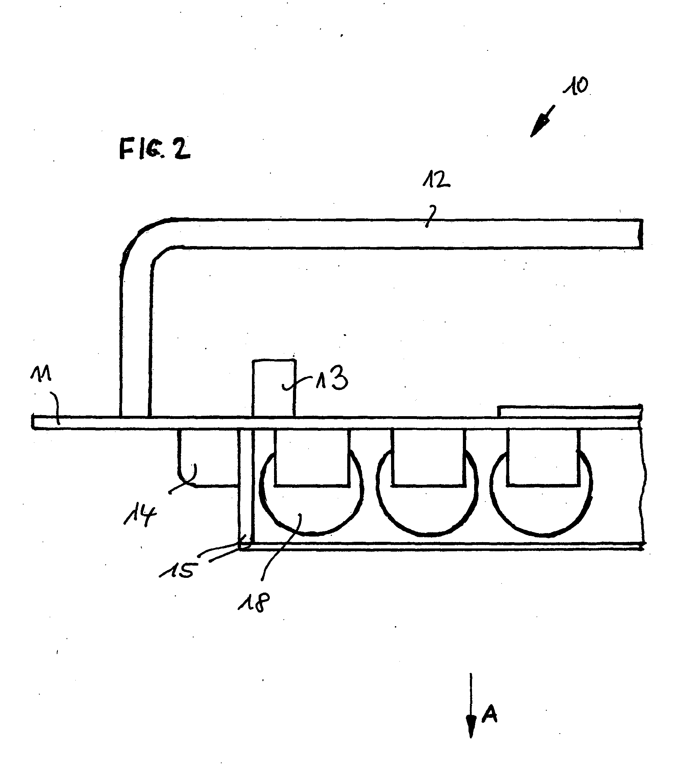

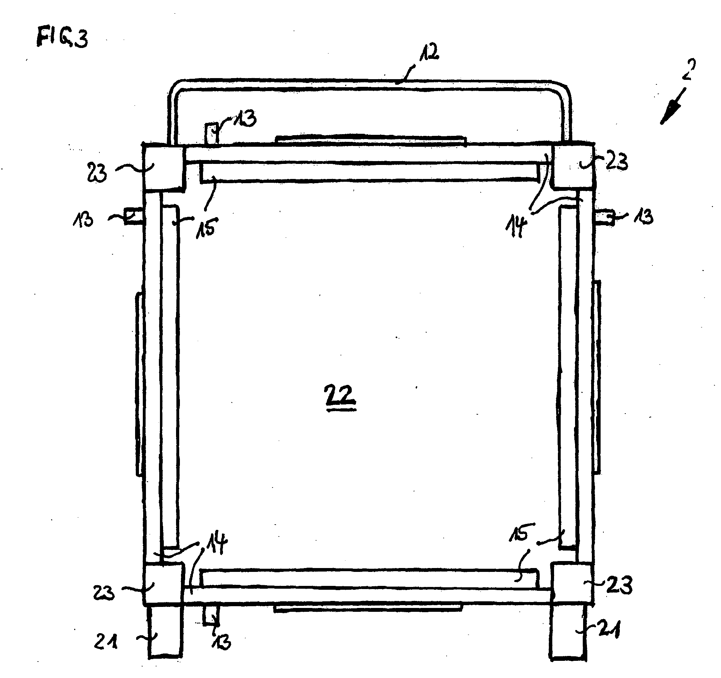

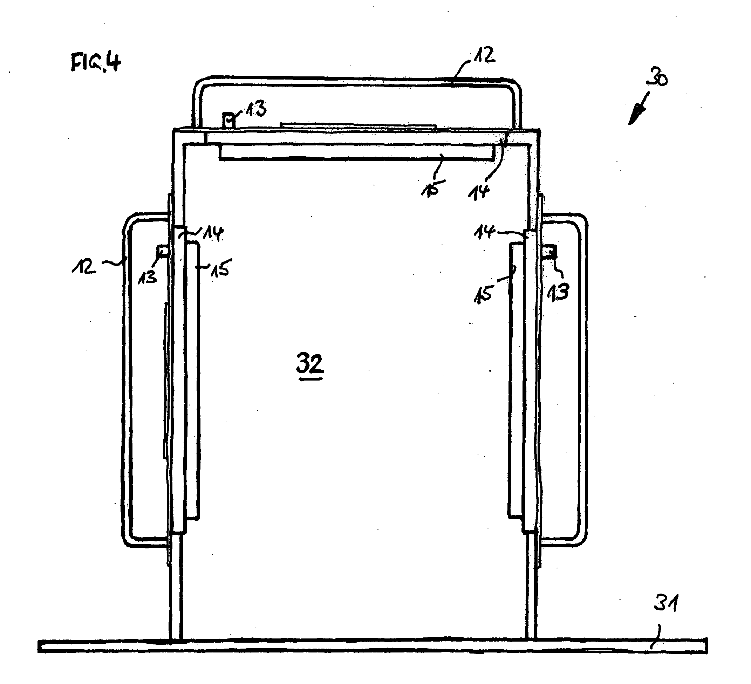

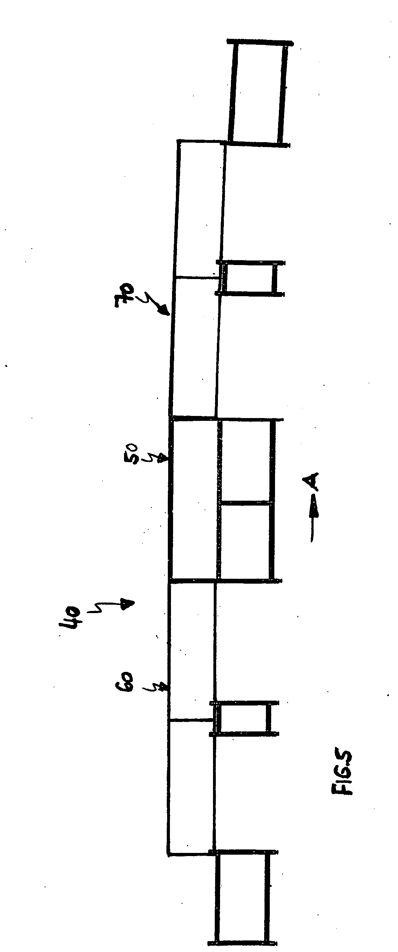

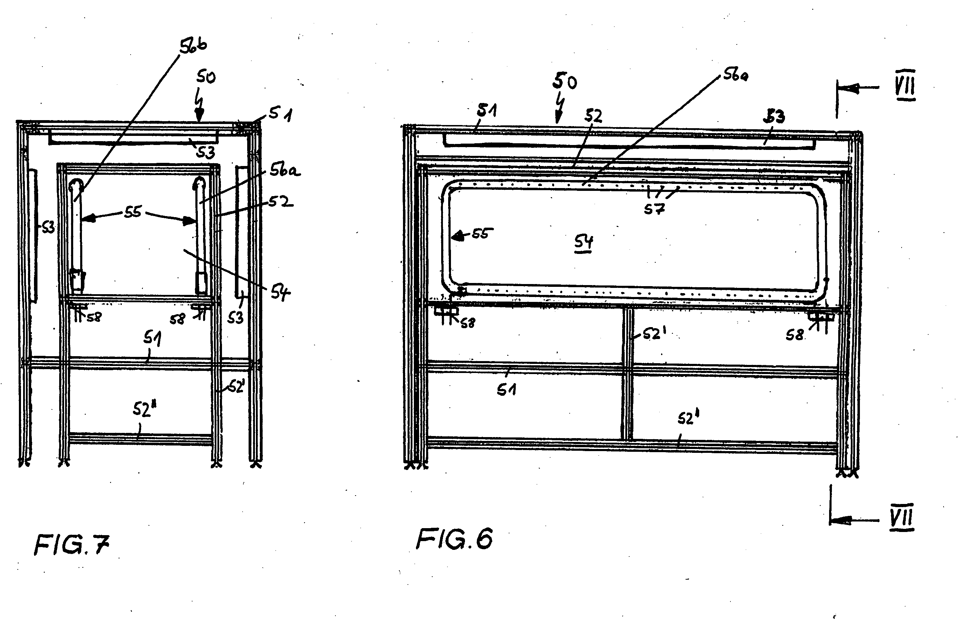

Zunächst soll der Aufbau eines Bestrahlungsmoduls 10 exemplarisch anhand des in den Figuren 1a, b, c und 2 dargestellten Ausführungsbeispiels beschrieben werden. Die Komponenten sind auf einer Grundplatte 11 montiert. Die Grundplatte 11 besteht vorzugsweise aus einem Metall wie Aluminium oder Stahl oder einer Metalllegierung und weist auf ihrer Rückseite die notwendigen elektrischen Anschlüsse 13 sowie ggf. eine Halterung 12 auf. Ferner können dort Vorrichtungen zum Einbau des Bestrahlungsmoduls 10 in Bestrahlungsanlagen und Vorrichtungen zur Bewegung des Bestrahlungsmoduls 10 vorgesehen sein. Auf der Grundplatte sind ferner die Starter und Anschlüsse für UV-Strahlungsquellen 18 montiert. Außerdem befinden sich hier Ein- und Ausgang für eine Lüftung 16 der Strahlungsquellen 18. Für diesen Zweck sind bspw. Querstromlüfter geeignet.

Auf der Vorderseite der Grundplatte 11 ist ferner ein Rahmen 14 vorgesehen, innerhalb dessen die Lüftung 16 und die UV-Strahlungsquellen 18 eingebaut sind. Geeignete UV-Strahlungsquellen 18 sind bspw. Leuchtstoffröhren, wie sie als Bräunungslampen in Solarien verwendet werden. Derartige Leuchtstoffröhren weisen in der Regel standardisierte Abmessungen auf, bspw. eine Leuchtlänge von 2 m bei einem Durchmesser von 25 bis 45 cm. Sie können ferner mit Reflektoren versehen sein, die einen Abstrahlwinkel von bspw. ca. 160° aufweisen. Diese Leuchtstoffröhren werden bei einer Betriebsspannung von 220 V betrieben.

Der Rahmen 14 mit der Lüftung 16 und den UV-Strahlungsquellen 18 ist nach drei Seiten luftdicht von einer UV-durchlässigen Platte 15, bspw. aus Kunststoff, wie bspw. Polymethylmethacrylat oder Polycarbonat, umschlossen. Die Oberfläche der Platte 150 bildet die Vorderseite des Bestrahlungsmoduls 10, wie es der die Strahlungsrichtung symbolisierende Pfeil A verdeutlicht.

Ein oder mehrere Bestrahlungsmodule 10 werden in ein abgeschlossenes Bestrahlungsgefäß eingebaut. Das Bestrahlungsgefäß umschließt eine Bestrahlungskammer, der von dem mindestens einen Bestrahlungsmodul beleuchtet wird.
Figur 3 zeigt schematisch ein Ausführungsbeispiel für eine Vorrichtung 20 zur diskontinuierlichen Bestrahlung von Substraten. Ein mit Standfüßen 21 versehener rechteckiger Behälter von 2,10 m Länge, 80 cm Breite und 80 cm Höhe wurde mit vier 1,50 m langen, mit 10 planar angeordneten Leuchtstoffröhren 18 versehenen Bestrahlungsmodulen 10 ausgerüstet. Die Bestrahlungsmodule 10 wurden an Rahmen des Behälters am Boden, den Seiten und dem Deckel befestigt. Das obere Bestrahlungsmodul kann mit dem Deckel des Behälters angehoben werden. Die Kühlung der Leuchtstoffröhren 18 in den Bestrahlungsmodulen 10 erfolgte durch Querstromlüfter.

Die Oberseiten der Platten 15 der Bestrahlungsmodule definieren und umschließen einen rechteckigen Bestrahlungsraum 22 von 1,60 m Länge, 60 cm Breite und 40 cm Höhe. Im Bestrahlungsraum 22 befinden sich ferner vier seitlich angeordnete Rohre 23 mit jeweils 40 Bohrungen zum Einlassen von Stickstoff.

Eine derartige Vorrichtung 20 kann wie folgt betrieben werden. Die beschichteten Substrate werden in den Bestrahlungsraum 22 eingebracht. Danach wird der Bestrahlungsraum 22 mit Inertgas geflutet. Bei Erreichen einer Sauerstoffkonzentration von 5 %, vorzugsweise 1 %, besonders bevorzugt 0,1 %, wird die Bestrahlung gestartet und nach Aushärtung der Schicht beendet. Die Dauer der Bestrahlung beträgt typischerweise etwa 30 bis 300 s. In dieser Ausführungsform eignet sich die erfindungsgemäße Vorrichtung insbesondere zur Härtung von Beschichtungen auf Substraten. Sie ermöglichen die Anwendung der Strahlungshärtung z. Bsp. im handwerklichen Bereich für Produktion und Reparatur. Vorteilhaft ist hierbei die moderate elektrische Anschlussleistung der Module, die typischerweise bei 1 bis 2 kW liegt.

In einem Versuch wurde als Substrat eine PKW-Felge mit einem strahlungshärtenden Spritzlack allseitig beschichtet. Die Felge wurde am Ventilloch mit einem Halter versehen und im Bestrahlungsraum 22 aufgehängt. Nach Schließen des Bestrahlungsraums 22 wurde dieser mit Stickstoff geflutet. Die Konzentration de Sauerstoffs wurde mit einem Sensor im Bestrahlungsraum 22 gemessen und angezeigt. Nach 2 min Fluten bei einem Stickstoffstrom von 60 m³/h wurde eine Sauerstoffkonzentration von unter 0,1 % erreicht. Nach Erreichen dieses Wertes wurde der Stickstoffstrom auf 10 m3/h verringert und die Bestrahlung gestartet. Nach einer Bestrahlungszeit von 2 min wurde der Stickstoff abgestellt und die Vorrichtung 20 geöffnet. Die Lackierung auf der Felge war an allen Stellen gehärtet und konnte auch unter manuellem Druck nicht beschädigt werden.

Mit den beschriebenen Strahlungsmodulen 10 kann aber auch ein Bestrahlungstunnel 30 aufgebaut werden, wie er in Figur 4 schematisch dargestellt ist. In einem solchen Bestrahlungstunnel 30 sind die Bestrahlungsmodule 10 an den Seiten und am der Oberseite so angeordnet, dass sie eine tunnelförmige Bestrahlungskammer 32 definieren und umschließen. Darin können z. Bsp. über Förderzeuge durchlaufende, beschichtete Substrate während des Durchlaufes gehärtet werden. Werden bspw. zwei Bestrahlungsmodule in Reihe angeordnet, kann die Leuchtlänge der Bestrahlungskammer 32 bis zu 4 m betragen. Erfolgt die Härtung innerhalb von etwa 30 bis 300 s, sind Durchlaufgeschwindigkeiten von 0,8 bis 8 m/min möglich. Zu beachten ist dabei, dass während des Durchlaufs und der Bestrahlung die Sauerstoff-Restkonzentration ausreichend niedrig sein sollte. Der durch die Bewegung des zu bestrahlenden Substrats in die Bestrahlungszone eingetragene Luftsauerstoff sollte den Grenzwert von 5 % nicht überschreiten. Deshalb sind vorteilhafterweise vor allem in Förderrichtung vor der Bestrahlungszone Schleusen und/oder geeignete Düsen zur Einspeisung von Inertgas, vorzugsweise Stickstoff, vorgesehen, die das Einwirbeln von Luft verhindern.

In Weiterführung dieses Ausführungsbeispiels wird im Folgenden der Gegenstand der vorliegenden Erfindung anhand der Figuren 5 bis 8 erläutert.

Figur 5 zeigt schematisch ein Ausführungsbeispiel einer erfindungsgemäßen Vorrichtung 40. Diese Vorrichtung besteht aus einer Bestrahlungskammer 50, der eine Einlaufkammer 60 und eine Auslaufkammer 70 zugeordnet sind. Das zu beschichtende Substrat wird in Richtung des Pfeils A mittels einer Fördereinrichtung, bspw. eines Förderbandes, zuerst durch die Einlaufkammer 60, dann durch die Bestrahlungskammer 50 und schließlich durch die Auslaufkammer 70 transportiert. In der Bestrahlungskammer 50 findet die eigentliche Härtung der Beschichtung des Substrats durch UV-Strahlen statt. Die Einlaufkammer 60, die Bestrahlungskammer 50 und die Auslaufkammer 70 bilden einen nach außen geschlossenen Kanal. Der Eingang und der Ausgang des geschlossenen Kanals, d.h. jeweils das von der Bestrahlungskammer 50 abgewandte Ende der Einlaufkammer 60 und der Auslaufkammer 70 können z.B. über angebrachte Klappen, Türen oder Schablonen soweit verschlossen werden, dass das Substrat passieren kann. Damit kann weniger Inertgas nach außen austreten, so dass der Verbrauch von Inertgas reduziert werden.

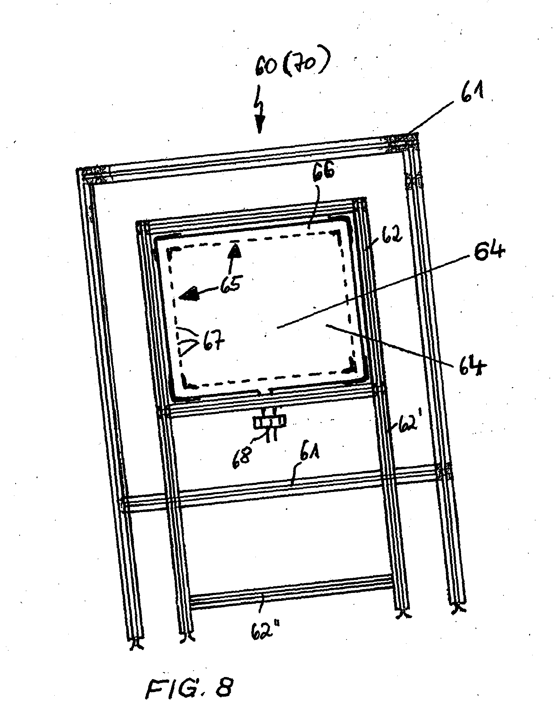

Die Figuren 6 und 7 zeigen schematisch den Aufbau der Bestrahlungskammer 50. Die Bestrahlungskammer 50 kann ebenso wie die Einlaufkammer 60 und/oder die Auslaufkammer 70 auch modular gestaltet sein, d.h. aus zwei oder mehr vorzugsweise baugleichen Elementen zusammengesetzt sein, die luftdicht miteinander verbunden sind und einen geschlossenen Kanal bilden. Ausgehend von Fig. 4 ist der Rahmen der Bestrahlungskammer 50 jetzt mit 51 bezeichnet. Innerhalb des Rahmens 51 ist ein zweiter Rahmen 52 angebracht, der bspw. aus vorzugsweise luftdicht gegeneinander verschlossenen, für UV-Licht durchlässigen Platten aufgebaut ist. Zwischen den Rahmen 51 und 52 sind UV-Strahler 53 angeordnet. Diese können, müssen aber nicht notwendigerweise, aus den beschriebenen Bestrahlungsmodulen bestehen. Der Rahmen 52 steht bspw. innerhalb des Rahmens 51 auf Stelzen 52', die mit Querstreben 52" versteift sind.

Der Rahmen 52 umschließt einen Bestrahlungsraum 54. Das Substrat wird mittels einer Fördereinrichtung durch den Bestrahlungsraum 54 gefördert, bspw. mittels eines Förderbandes. Dabei wird das Substrat zunächst am Anfang der Vorrichtung 40 in die Einlaufkammer 60 transportiert, und es wandert weiter durch die Bestrahlungskammer 50 und die Auslaufkammer 70, bis es am Ende der Auslaufkammer 70 die Vorrichtung 40 verlässt. Innerhalb des Bestrahlungsraums 54 ist eine Vorrichtung 55 zur Einspeisung von Inertgas, bspw. Stickstoff oder Kohlendioxid, angebracht. Diese Vorrichtung 55 weist bspw. zwei entlang der inneren Längsseiten des Bestrahlungsraumes 54 umlaufende Rohre 56a, 56b auf. Selbstverständlich können auch mehrere derartige Rohre unter- oder nebeneinander angeordnet oder sonst in beliebiger Weise miteinander kombiniert sein, bspw. dann, wenn der Bestrahlungsraum besonders lang oder hoch bemessen ist. Diejenigen Rohrabschnitte, die parallel zur Förderrichtung (Pfeil A) des Substrats verlaufen, weisen eng nebeneinanderliegende Ausströmöffnungen 57 für ein Inertgas, bspw. Stickstoff oder Kohlendioxid auf. Die Ausströmöffnungen können bspw. als Düsen oder Bohrungen ausgestaltet sein. An der Unterseite der Rohre 56a, 56b, außerhalb des Bestrahlungsraums 54, aber innerhalb der Bestrahlungskammer 50, sind Ventile 58 vorgesehen, um den Volumenstrom des durch sie hindurch zugeführten Inertgases manuell oder elektronisch zu regeln.

Statt Rohren mit Ausströmöffnungen können bspw. auch poröse Materialien zum Einsatz kommen, wobei das Inertgas durch die Poren hindurch in den Bestrahlungsraum 54 eintritt. Denkbar wäre bspw. dass die Innenwände des Bestrahlungsraums 54 teilweise mit Platten aus porösem Material, bspw. Sintermaterial, Keramik, etc. verkleidet sind und das Inertgas in den Zwischenraum zwischen dem Bestrahlungsraum 54 und den Platten eingeleitet wird. Besonders geeignet sind solche poröse Materialien, bei denen die Poren klein und regelmäßig eng nebeneinander angeordnet sind. Dies bewirkt, dass das Inertgas im Wesentlichen wirbelfrei ausströmt.

Eine oder mehrere baugleiche Vorrichtungen 55 können auch in der Einlaufkammer 60 oder in der Auslaufkammer 70 oder in beiden Kammern vorgesehen sein, um den Lufteintritt in den geschlossenen Kanal während des Eintritts bzw. Austritts des Substrats weiter zu reduzieren. Stattdessen oder zusätzlich kann auch eine Vorrichtung 65 vorgesehen sein, wie sie in Figur 8 am Beispiel einer Einlaufkammer 60 dargestellt ist, wobei die folgenden Ausführungen für die Auslaufkammer 70 entsprechend gelten. Auch die Einlaufkammer 60 (bzw. die Auslaufkammer 70) weist einen Rahmen 61 auf, innerhalb dessen ein zweiter Rahmen 62 angebracht ist, der einen Förderaum 63 umschließt. Dieser Rahmen 62 kann nun aus einem beliebigen Material sein; es kommt nur darauf an, dass er so gestaltet ist, dass der Förderraum 64 der Einlaufkammer 60 (bzw. der Auslaufkammer 70) und der Bestrahlungsraum 54 der Bestrahlungskammer zu einem geschlossenen Kanal zusammengefügt werden können. Der Rahmen 62 steht bspw. innerhalb des Rahmens 61 auf Stelzen 62', die mit Querstreben 62" versteift sind.

Das Substrat wird mittels einer Fördereinrichtung durch den Förderraum 64 und den Bestrahlungsraum 54 gefördert, bspw. mittels eines Förderbandes. Dabei wird das Substrat zunächst am Anfang der Vorrichtung 40 in den Förderraum 64 der Einlaufkammer 60 transportiert, und es wandert weiter durch den Bestrahlungsraum 54 der Bestrahlungskammer 50 und den Förderraum der Auslaufkammer 70, bis es am Ende der Auslaufkammer 70 die Vorrichtung 40 verlässt. Innerhalb des Förderraums 64 ist entweder eine Vorrichtung 55 zur Einspeisung von Inertgas, bspw. Stickstoff oder Kohlendioxid, angebracht, wie sie am Beispiel des Bestrahlungsraums 54 bereits beschrieben wurde. Stattdessen oder zusätzlich kann eine Vorrichtung 65 zur Einspeisung von Inertgas vorgesehen sein. Diese Vorrichtung 65 weist ein entlang des Querschnitts des Förderraumes 64 umlaufendes Rohr 66 auf. Selbstverständlich können auch mehrere derartige Rohre nebeneinander angeordnet oder sonst in beliebiger Weise miteinander kombiniert sein, bspw. dann, wenn der Förderraum 64 besonders lang oder hoch bemessen ist. Das Rohr 64 weist eng nebeneinanderliegende Ausströmöffnungen 67 für ein Inertgas, bspw. Stickstoff oder Kohlendioxid auf. Die Ausströmöffnungen 67 können bspw. als Düsen oder Bohrungen ausgestaltet sein. An der Unterseite des Rohrs 66, außerhalb des Förderraums 64, aber innerhalb der Einlaufkammer 60, sind Ventile 68 vorgesehen, um den Volumenstrom des durch sie hindurch zugeführten Inertgases manuell oder elektronisch zu regeln.

Statt Rohren mit Ausströmöffnungen können bspw. auch poröse Materialien zum Einsatz kommen, wobei das Inertgas durch die Poren hindurch in den Förderraum 64 eintritt. Denkbar wäre bspw. dass die Innenwände des Förderraums 64 ganz oder teilweise mit Platten aus porösem Material, bspw. Sintermaterial, Keramik, etc. verkleidet sind und das Inertgas in den Zwischenraum zwischen dem Förderraum 64 und den Platten eingeleitet wird. Besonders geeignet sind solche poröse Materialien, bei denen die Poren klein und regelmäßig eng nebeneinander angeordnet sind. Dies bewirkt, dass das Inertgas im Wesentlichen wirbelfrei ausströmt.

Die erfindungsgemäße Vorrichtung 40 wird wie folgt betrieben:

Die Substrate durchlaufen einzeln oder kontinuierlich den geschlossenen Kanal. Die für die Strahlenhärtung erforderliche niedrige Konzentration an Restsauerstoff wird durch kontinuierliche Einspeisung von Inertgas in den Bestrahlungsraum 54 der Bestrahlungskammer 50 erreicht, wobei das Inertgas aus den Rohren 56, 66 im Wesentlichen wirbelarm ausströmt. Damit entsteht ein Inertgas-Volumenstrom in Richtung des Förderraums 64 der Einlaufkammer 60 bzw. der Auslaufkammer 70. Dazu wird im Bestrahlungsraum 54 durch entsprechende Inertgaszuführung ein zumindest geringfügiger Überdruck eingestellt. Dies bewirkt, dass das Inertgas kontinuierlich in Richtung der Förderräume 64 ausfließt. Zusätzlich wird das Inertgas als ein in Förderrichtung verlaufender Volumenstrom in den Bestrahlungsraum 54 eingespeist und aufrechterhalten. Die Orientierung in Förderrichtung bewirkt eine zusätzliche Orientierung des Inertgases hin zu den Förderräumen 64, um den Eintritt von Luftsauerstoff in den Bestrahlungsraum zu erschweren. Das ausfließende Inertgas entfernt somit den durch die Förderung des Substrats eingeschleppten Luftsauerstoff aus dem geschlossenen Kanal.

Im Ausführungsbeispiel sind zusätzlich sowohl im Förderraum 64 der Einlaufkammer 60 als auch im Förderraum der Auslaufkammer 70 Vorrichtungen 65 zum Einspeisen von Inertgas vorgesehen. Der Inertgas-Druck in den Förderräumen wird aber so eingestellt, dass er geringer ist als der Inertgas-Druck im Bestrahlungsraum 54. Auf diese Weise bleibt der Inertgasfluss aus dem Bestrahlungsraum 54 in Richtung der Förderräume 64 erhalten, aber der Eingang und der Ausgang des geschlossenen Kanals werden zusätzlich gegen das Eindringen von Luftsauerstoff abgeschirmt.

Im Ausführungsbeispiel sind die Vorrichtungen 65 zur Einspeisung von Inertgas in die Förderräume 64 von Einlaufkammer 60 und Auslaufkammer 70 so ausgebildet, dass deren Inertgasfluss dem in Förderrichtung verlaufenden Volumenstrom seitlich überlagert wird. Dies wird dadurch erreicht, dass die Rohre 66 mit ihrem Ausströmöffnungen 67 senkrecht zur Förderrichtung des Substrats angeordnet sind. Die Ausströmöffnungen sind im Ausführungsbeispiel ferner so eingestellt, dass das ein- und/oder auslaufende Substrat schräg zur Förderrichtung mit einem Inertgasstrom beaufschlagt wird, der mitgeführte Luft ablöst und in den auslaufenden Volumenstrom abdrängt. In der Förderkammer der Auslaufkammer 70 verhindert diese Art der Einspeisung von Inertgas in vorteilhafter Weise zusätzlich die Rückverwirbelung von Luft in den Bestrahlungsraum 54 der Bestrahlungskammer 50.

Im Allgemeinen werden Inertgas-Volumenströme von 15 bis 1000 Nm³/h, vorzugsweise zwischen 30 und 400 Nm³/h verwendet. Die Flussrate des senkrecht zur Förderrichtung eingespeisten Inertgas-Volumenstroms beträgt vorzugsweise etwa 10 bis 80 Vol.-% des gesamten Inertgas-Volumenstroms, vorzugsweise 15 bis 60 Vol.-% des Volumenstroms. Die Flussrate für den Volumenstrom kann in einem geschlossenen Kanal mit einem Querschnitt von bspw. 500 x 500 mm typischerweise 200 Nm³/h betragen, während die Flussrate des senkrecht zur Förderrichtung eingespeisten Inertgases vorzugsweise etwa 25 - 50 Vol.-% des Volumenstroms beträgt.

## Patentansprüche

1. Verfahren zur Härtung einer strahlungshärtbaren Beschichtung auf einem Substrat in einer mit mindestens einer oder mehreren UV-Strahlungsquellen (18, 53) versehenen Bestrahlungskammer (50), **dadurch gekennzeichnet, dass** das Substrat durch einen geschlossenen Kanal geführt wird, der von einer Einlaufkammer (60), der Bestrahlungskammer (50) und einer Auslaufkammer (70) gebildet ist, und dass in die Bestrahlungskammer (50) ein Inertgas derart eingespeist wird, dass einen zumindest geringfügigen Inertgas-Überdruck in der Bestrahlungskammer erzeugt wird.

2. Verfahren nach Anspruch 1, **dadurch gekennzeichnet, dass** zusätzlich entweder in die Einlaufkammer (60) oder in die Auslaufkammer (70) oder in beide ebenfalls Inertgas eingespeist wird, derart, dass ein Inertgas-Druck erzeugt wird, der geringer ist als der Inertgas-Druck in der Bestrahlungskammer (50).

3. Verfahren nach einem der vorhergehenden Ansprüche, **dadurch gekennzeichnet, dass** das Inertgas in der Bestrahlungskammer (50) als ein in Förderrichtung verlaufender Volumenstrom eingespeist und aufrechterhalten wird.

4. Verfahren nach einem der vorhergehenden Ansprüche, **dadurch gekennzeichnet, dass** das Inertgas derart in die Bestrahlungskammer (50) und/oder die Einlaufkammer (60) und/oder die Auslaufkammer (70) eingespeist wird, dass der Volumenstrom aus der Bestrahlungskammer (50) in Richtung der Einlaufkammer (60) und der Auslaufkammer (70) im Wesentlichen wirbelarm ausfließt.

5. Verfahren nach einem der Ansprüche 3 bis 4, **dadurch gekennzeichnet, dass** der Inertgas-Volumenstrom aus der Bestrahlungskammer (50) entweder in der Einlaufkammer (60) oder in der Auslaufkammer (70) oder in beiden Kammern durch schräg zur Förderrichtung ausströmendes Inertgas überlagert wird.

6. Verfahren nach Anspruch 5, **dadurch gekennzeichnet, dass** der überlagerte Inertgas-Volumenstrom 10 bis 50 Vol.-% des gesamten Inertgas-Volumenstroms, vorzugsweise 15 bis 30 Vol.-% des Volumenstroms beträgt.

7. Verfahren nach einem der vorhergehenden Ansprüche, **dadurch gekennzeichnet, dass** 1-nertgas-Volumenströme von 15 bis 1000 Nm³/h, vorzugsweise zwischen 30 und 400 Nm³/h verwendet werden.

8. Bestrahlungskammer (50), insbesondere zur Durchführung des Verfahrens nach einem der Ansprüche 1 bis 7, **dadurch gekennzeichnet, dass** sie einen Rahmen (51) aufweist, innerhalb dessen ein Bestrahlungsraum (54) mit für UV-Licht durchlässigen Wänden vorgesehen ist, in welchem eine Vorrichtung (55) zur Einspeisung von Inertgas vorgesehen ist.

9. Bestrahlungskammer nach Anspruch 8, **dadurch gekennzeichnet, dass** die Vorrichtung (55) bebündelte Hohlkörper aufweist, die mit eng gesetzten düsenförmigen und/oder porösen Öffnungen versehen sind.

10. Bestrahlungskammer nach einem der Ansprüche 8 bis 9, **dadurch gekennzeichnet, dass** die Vorrichtung (55) Rohre (56, 56a, 56b) aufweist, die parallel zur Förderrichtung des Substrats angeordnet sind.

11. Bestrahlungskammer nach einem der Ansprüche 8 bis 10, **dadurch gekennzeichnet, dass** sie aus zwei oder mehreren luftdicht miteinander verbundenen Elementen zusammengesetzt ist.

12. Vorrichtung (20, 30, 40) zur Härtung einer strahlungshärtbaren Beschichtung, welche eine mit einer oder mehreren UV-Strahlungsquellen (18, 53) versehene Bestrahlungskammer (50) aufweist, **dadurch gekennzeichnet, dass** der Bestrahlungskammer (50) eine Einlaufkammer (60) und eine Auslaufkammer (70) zugeordnet ist, wobei Bestrahlungskammer (50), Einlaufkammer (60) und Auslaufkammer (70) einen geschlossenen Kanal bilden, und dass die Bestrahlungskammer (50) eine Vorrichtung (55, 65) zur Einspeisung von Inertgas aufweist, welche einen zumindest geringfügigen Inertgas-Überdruck in der Bestrahlungskammer (50) erzeugt.

13. Vorrichtung nach Anspruch 12, **dadurch gekennzeichnet, dass** die Bestrahlungskammer (50) und/oder die Einlaufkammer (60) und/oder die Auslaufkammer (70) aus zwei oder mehreren, luftdicht miteinander verbundenen Elementen zusammengesetzt ist.

14. Vorrichtung nach einem der Ansprüche 12 bis 13, **dadurch gekennzeichnet, dass** die Einlaufkammer (60) oder die Auslaufkammer (70) oder beide ebenfalls eine Vorrichtung (55, 65) zur Einspeisung von Inertgas aufweisen, welche einen Inertgas-Druck erzeugen, der geringer ist als der Inertgas-Druck in der Bestrahlungskammer (50).

15. Vorrichtung nach Anspruch 14, **dadurch gekennzeichnet, dass** die Vorrichtung (55, 65) zur Einspeisung von Inertgas entweder in die Einlaufkammer (60) oder in die Auslaufkammer (70) oder in beiden Kammern derart angeordnet ist, dass das Inertgas schräg zur Förderrichtung ausströmt.

16. Vorrichtung nach einem der Ansprüche 12 bis 15, **dadurch gekennzeichnet, dass** die Vorrichtung (55, 65) bebündelte Hohlkörper aufweist, die mit eng gesetzten düsenförmigen und/oder porösen Öffnungen versehen sind.

17. Vorrichtung nach einem der Ansprüche 12 bis 16, **dadurch gekennzeichnet, dass** mehrere UV-Strahlungsquellen (188) eng nebeneinander angeordnet und zu ein oder mehreren Bestrahlungsmodulen (100) zusammen geschaltet sind, wobei die Beleuchtungsstärke innerhalb eines Bestrahlungsmoduls (100) und/oder zwischen mindestens zwei Bestrahlungsmodulen (100) räumlich variabel ist.

18. Vorrichtung nach einem der Ansprüche 12 bis 17, **dadurch gekennzeichnet, dass** die Bestrahlungskammer (20) einen Rahmen (21) aufweist, in dem für UV-Licht durchlässige Flächen (22) eingepasst sind.

19. Vorrichtung nach Anspruch 18, **dadurch gekennzeichnet, dass** die UV-Licht durchlässige Flächen (22) gegeneinander luftdicht abgeschlossen sind.

20. Vorrichtung nach einem der Ansprüche 12 bis 19, **dadurch gekennzeichnet, dass** als UV-Strahlungsquellen Lampen, vorzugsweise Leuchtstoffröhren (180) mit einer Leistung von 0,1 bis 10 W pro cm Strahlerlänge, vorzugsweise 1 W pro cm Strahlerlänge, vorgesehen sind.

21. Vorrichtung nach einem der Ansprüche 12 bis 20, **dadurch gekennzeichnet**, das die UV-Strahlungsquellen (180) ein kontinuierliches Emissionsspektrum zwischen 200 und 450 nm, vorzugsweise zwischen 300 und 450 nm aufweisen.

22. Vorrichtung nach einem der Ansprüche 12 bis 21, **dadurch gekennzeichnet, dass** eine Lüftung (160) zur Kühlung der Oberfläche der UV-Strahlungsquellen (180) vorgesehen ist.

23. Vorrichtung nach einem der Ansprüche 12 bis 22, **dadurch gekennzeichnet, dass** zumindest mehrere Strahlungsquellen (188) Reflektoren, vorzugsweise mit Abstrahlwinkeln von 160° aufweisen.

24. Vorrichtung nach einem der Ansprüche 12 bis 23, **dadurch gekennzeichnet, dass** wenigstens ein Bestrahlungsmodul (100) um mindestens eine seiner Achsen bewegbar in der Vorrichtung (1) angeordnet ist. \

25. Vorrichtung nach einem der Ansprüche 12 bis 24, **dadurch gekennzeichnet, dass** die Beleuchtungsstärke mindestens eines Bestrahlungsmoduls (100) zeitlich variabel einstellbar ist.
